# EUROPÄISCHE PATENTSCHRIFT

(11) **EP 0 982 197 B1**
(45) Veröffentlichungstag und Bekanntmachung des Hinweises auf die Patenterteilung: **22.01.2003**
(21) Anmeldenummer: 99110827.5
(22) Anmeldetag: 05.06.1999
(51) Int. Cl.: B60R 21/13

(54) **Überrroll-Schutzvorrichtung**
Roll-over protection device
Dispositif à arceau de sécurité

(30) Priorität: 27.08.1998 DE 19838989
(43) Veröffentlichungstag der Anmeldung: 01.03.2000
(73) Patentinhaber: ISE Innomotive Systems Europe GmbH, 51702 Bergneustadt (DE)
(72) Erfinder: Zupancic, Manuela, geb. Kahlert, 51702 Bergneustadt (DE); Nass, Michael, 51702 Bergneustadt (DE); Nowack, Reinhard, 57489 Drolshagen (DE)
(74) Vertreter: Fuchs Mehler Weiss & Fritzsche

(56) Entgegenhaltungen:
- DE-A- 4 314 538
- DE-A- 19 523 790
- US-A- 5 236 219
- US-A- 5 671 947

## Beschreibung

Die Erfindung betrifft eine Überroll-Schutzvorrichtung gemäß dem Oberbegriff des Anspruches 1.

Zum Schutz der Insassen von Personenkraftfahrzeugen, aber auch von Traktoren, ist es bekannt, diese Fahrzeuge mit einer Überroll-Schutzvorrichtung zu versehen. Dabei haben sich in der Praxis zwei Systeme herausgebildet.

Bei dem einen System ist ein feststehender, sich über die gesamte Fahrzeugbreite erstreckender, mitunter als "Henkel" bezeichneter, Überrollbügel vorgesehen.

Bei dem zweiten System, an das sich auch die Erfindung wendet, ist jedem Fahrzeugsitz ein Überrollbügel zugeordnet, der in der Ruhelage in einer fahrzeugfesten Kassette verborgen ist und bei Beginn einer Überrollbewegung sehr schnell in eine Stützlage, sich dabei selbst verriegelnd, ausgefahren wird.

Diese ausfahrbaren Überrollbügel bestehen typischerweise aus einem U-förmig geformten Bügel, dessen rohrförmige Schenkel in Standrohren der Kassetten vertikal geführt sind. Im Innern jedes Schenkels ist eine Spiralfeder angeordnet, welche durch eine Haltevorrichtung unter Vorspannung gehalten wird, die durch einen Überschlag-Sensor lösbar ist, wodurch der Überrollbügel unter der Wirkung der Feder in Zehntelsekunden aus der Kassette ausgeschoben und in der Stützlage verriegelt wird. Die beiden rohrförmigen Schenkel sind dabei - unter Ausbildung des U-förmigen Charakters des Bügels - durch einen quer verlaufenden Steg miteinander verbunden, über den eine gepolsterte Abdeckung geschoben ist.

Es ist bekannt (WO 95/03952), die rohrförmigen Elemente des Überrollbügels aus hochfestem Stahl zu fertigen, teils unter Verwendung von Stahlrohren, zum Teil unter Verwendung von Blech-Halbschalen. Diese Bauweise ist aufwendig und damit teuer. Ferner haben die verwendeten Bauelemente ein hohes Gewicht, was nicht nur grundsätzlich unerwünscht ist, sondern auch besonders kräftige Antriebsfedern zum schnellen Ausfahren der Überrollbügel bedingt, damit die relativ schweren Bügel in kürzester Zeit in ihre Stützlage gebracht werden können.

Es ist daher auch ein Überrollbügel bekannt geworden (DE 43 14 538 A 1), bei dem insbesondere die Schenkel des Überrollbügels und die führenden Standrohre aus Strangpreßprofilen bestehen. Da Strangpreßprofile gegenüber Stahlrohren den Vorteil einer geringeren Masse und einer preiswerteren Herstellung haben, ist dieser bekannte Überrollbügel nicht nur verhältnismäßig leicht an Gewicht, sondern auch kostengünstig herstellbar.

Bei Überrollbügel kommt es allerdings in besonderem Maße auf eine hohe Materialsteifigkeit an, damit im Überrollfall Kopfverletzungen der Fahrzeuginsassen infolge Abknickens des Überrollbügels verhindert werden. Strangpreßprofile sind jedoch naturgemäß durch das verwendete relativ weiche Material aus Aluminium oder Aluminiumlegierungen entsprechend leicht verformbar.

Durch die gattungsgemäße DE 195 23 790.0 A 1 ist es zur Erhöhung der Steifigkeit des Bügelkörpers bekannt geworden, als Bügelkörper einen Strangpreß-Profilkörper mit rohrförmigen Schenkeln, die durch eine Verbindungsplatte einstückig miteinander verbunden sind, vorzusehen, wobei dieser Strangpreß-Profilkörper vorzugsweise ein brillenförmiges Profil bildet. Dieser Profilbügelkörper ist dabei von einem ebenfalls einstückigen Führungsblock, der ebenfalls vorzugsweise aus einem Profilkörper besteht, über einen Teil seiner Länge umgeben. Dieser Führungsblock ist in einer Blechkassette, von dieser umgeben, befestigt, die das Außengehäuse des Überrollbügels bildet, und die ihrerseits fahrzeugfest, z.B. an der Hinterwand des Fahrgastraumes eines Cabriolets befestigt ist.

Wenngleich sich im vorstehend bekannten Fall der den Bügel vorgebende Profilkörper sich mit seinem Profil über die gesamte Bügelbreite erstreckt, so entspricht das bekannte Profil immer noch der bekannten, typischen Grundstruktur eines Überrollbügels, mit zwei rohrförmig ausgebildeten Schenkelteilen, in denen jeweils ein Federantrieb angebracht ist, und die mit etwa 3/4 ihres Umfanges jeweils ein Standrohr umfassen, die am Boden der Kassette befestigt sind.

Zusätzlich zur Führung des Profil-Bügelkörpers mittels seiner Bügelschenkel in den Standrohren sind im Führungsblock in Ausnehmungen vier Kunststoff-Gleitkörper angeordnet, die in führendem Gleitkontakt mit dem Profil-Bügelkörper stehen.

Im Freiraum zwischen den Bügelschenkeln ist mittig am Profil-Bügelkörper eine Zahnstange befestigt, welche mit einer Rastklinke zusammenwirkt, die am Führungsblock in einem Rastengehäuse, senkrecht zur Bügelkörper-Breite schwenkbar, befestigt ist und mittels zweier Klinkenfedern in Wirkeingriff mit den Zähnen der Zahnstange bringbar ist, derart, daß ein Ausfahren des Profil-Bügelkörpers nach oben in die Stützlage jederzeit möglich ist, indem die Rastklinke über die Zähne der Zahnstange ratscht, wogegen eine Bewegung nach unten in Richtung Grundstellung durch den Wirkeingriff der Rastklinke mit dem jeweiligen Zahn der Zahnstange gesperrt ist. Die Zahnstange mit der Rastklinke dient daher der Selbstverriegelung des Überroll-Körpers in der Stützstellung, wenn aufgrund des Überschlages eine Kraft auf den Profil-Bügelkörper ausgeübt wird.

Am Rastengehäuse des Führungsblockes ist weiterhin eine Entriegelungsklinke in derselben Ebene wie die Rastklinke schwenkbar, befestigt, die mit einer hakenförmigen Nase im Wirkeingriff mit einem Stift am Profil-Bügelkörper steht und diesen damit gegen die Kraft der vorgespannten Antriebsfedern in der verriegelten Grundstellung hält. Dieser Entriegelungsklinke ist ein Kraftelement zugeordnet, beispielsweise eine stiftausstoßende, pyrotechnisch betätigte Patrone oder ein Crashmagnet, das, von einem Überschlagsensor aktiviert, die Entriegelungsklinke mechanisch außer Wirkeingriff mit dem Stift am Profil-Bügelkörper bringt und damit die Ausfahrbewegung des Profil-Bügelkörpers im Crash-Fall freigibt.

An der oberen Stirnseite des Profil-Bügelkörpers ist eine Querstrebe angebracht, die durch eine ungepolsterte Kunststoffkappe abgedeckt ist.

Da bei dem bekannten Profilkörper-Bügel die Wandstärke der Verbindungsplatte zwischen den beiden rohrförmigen Bügelschenkel-Profilteilen verhältnismäßig klein ist, muß die gesamte Steifigkeit gegen Knicken von den rohrförmigen Bügelschenkel-Profilteilen aufgebracht werden, wodurch deren Durchmesser und Wandstärke verhältnismäßig groß ausgebildet ist. Dadurch ist die Tiefe des Profils und damit die der aufnehmenden Außen-Führungsvorrichtung bzw. Kassette verhältnismäßig groß.

Bedingt durch die Profilform des bekannten Bügelkörpers umschließen die Bügelschenkel-Profilteile die Standrohre nur teilweise im engen Abstand, so daß die Führung durch die Standrohre nicht ausreicht und weitere Führungsmittel vorgesehen werden müssen.

Ferner ist es durch die Profilgebung notwendig, wie herkömmlich, in jedem Schenkel einen eigenen Antrieb vorzusehen. Dadurch ist der Antriebsaufwand genauso groß wie im Fall eines Überrollschutzsystems mit einem U-förmigen Überrollbügel.

Der Führungsblock ist im bekannten Fall in axialer Richtung relativ kurz ausgebildet. Dadurch ist ein weiteres Bauteil, die Kassette, zur Aufnahme des Führungsblockes und des Profil-Bügelkörpers notwendig.

Die Kunststoff-Abdeckkappe kann, weil ungepolstert, einen Aufprall des Kopfes eines Fahrzeuginsassen, nicht dämpfen.

Der Erfindung liegt die Aufgabe zugrunde, die eingangs bezeichnete Überroll-Schutzvorrichtung für Kraftfahrzeuge, mit einem jedem Fahrzeugsitz zugeordneten Schutzsystem, bestehend aus
- einer fahrzeugfest angeordneten Kassette, die als kastenförmiger biegeversteifter Profil-Führungskörper ausgebildet ist, der sich über die gesamte Kassettenhöhe erstreckt,
- einem in der Kassette ausfahrbar in Führungen gehalterten und geführten Überrollkörper in Form eines sich über die gesamte Kassettenbreite erstreckenden Profil-Bügelkörpers,
- einer Klinken-/Rastanordnung zur Selbstverriegelung der Ausfahrbewegung, und
- einem Federantriebssystem zum Ausfahren des Profil-Bügelkörpers mit am Profil-Bügelkörper angreifender, vorgespannter Druckfeder, und mit einer mechanischen Verriegelungsanordnung zum Halten der Druckfeder im vorgespannten Zustand, der ein im Überschlagfall entriegelndes Auslösesystem zugeordnet ist,
so auszubilden, daß sie nur aus wenigen Teilen besteht und dabei einfach herstellbar ist sowie in der Tiefe sehr schmal gehalten werden kann.

Die Lösung dieser Aufgabe gelingt gemäß der Erfindung durch die Merkmale:
- der Profil-Bügelkörper ist kastenprofilartig, biegeversteift ausgebildet,
- an den Schmalseiten des Profil-Bügelkörpers und der Führungskörperkassette sind zueinander komplementäre Führungselemente ausgebildet,
- das Federantriebssystem weist nur eine einzige, mittig im Profil-Bügelkörper angeordnete Druckfeder auf,
- die Klinken-/Rastanordnung liegt in einer zu der Bügelbreite-seite parallelen Ebene in einer Ausbuchtung des Profil-Bügelkörpers
- der obere Teil des Profil-Bügelkörpers ist mit Schaumstoff umkleidet, und
- das Auslösesystem mit dem zugeordneten Element der Verriegelungsanordnung ist im Bodenbereich der Führungskörper-Kassette und das Gegenelement der Verriegelungsanordnung am unteren Bereich des Profil-Bügelkörpers angebracht.

Die erfindungsgemäße Überroll-Schutzvorrichtung weist mit Vorteil nur zwei gegeneinander verschiebbare Grundelemente auf, den kastenprofilartigem, biegeversteift ausgebildeten Profil-Bügelkörper und den kastenförmigen, biegeversteift ausgebildeten Führungskörper, der zugleich die Kassette, d.h. das Gehäuse der Überroll-Schutzvorrichtung, bildet. Diese Profilgestaltung der beiden Grundelemente gewährleisten eine hohe Kraftaufnahme, insbesondere hinsichtlich einer Längsbiegung.

Durch die Führung des Profil-Bügelkörpers an seinen Schmalseiten und dem Wegfall der rohrförmigen Bügelschenkel in Verbindung mit den in der Kassette angeordneten Standrohren, ist einmal eine einfachere Führung gegeben und zudem kann in Verbindung mit dem schmalen Kastenprofil des Bügelkörpers und des Führungskörpers das Überroll-Schutzsystem in der Tiefe sehr schmal gehalten werden, was die Unterbringung in dem Fahrzeug wesentlich erleichtert, da bekanntermaßen, z.B. in einem Cabriolet, die Raumverhältnisse ohnehin sehr beengt sind.

Durch den mittigen Antrieb mit nur einer einzigen Druckfeder ist auch das Antriebssystem wesentlich einfacher und kostengünstiger herzustellen.

Durch die Anbringung der Klinken-/Rastanordnung parallel zu der Bügelbreite in einer Ausbuchtung des Profil-Bügelkörpers ist eine günstige Platzausnutzung gegeben, da die Ausbuchtung nur eine geringe Tiefe haben muß, im Gegensatz zu dem bekannten Profil-Bügelkörper, bei dem die Klinken-/Rastanordnung senkrecht zu der Bügelbreite ausgebildet ist, was eine entsprechend tiefe Ausbuchtung bedingt, die in Verbindung mit den rohrförmigen Bügelschenkeln zu dem brillenartigen Profil des bekannten Bügelkörpers führt.

Durch die kastenförmige Ausbildung des Profilkörpers ist seine frontseitige Fläche durchgehend eben ausgebildet, wodurch diese auf einfachere Weise mit einem Schaumstoff aufpolsterbar ist, um einen Kopfaufschlag zu dämpfen.

Durch Unterbringung der Verriegelungsanordnung mit dem Auslösesystem im unteren Teil der Führungskörper-Kassette wird der dort vorhandene Raum optimal ausgenutzt und es wird keine weitere Ausbuchtung im oberen Bereich der Profilkörper notwendig.

Die erfindungsgemäße Überroll-Schutzvorrichtung für Kraftfahrzeuge besteht daher aus nur wenigen Teilen und ist dabei sehr einfach und damit sehr kostengünstig herstellbar. Die Kostensituation im Automobilbau, insbesondere im Zulieferbereich, ist jedoch, wie bekannt, ein wesentliches Element, um im Wettbewerb bestehen zu können.

Der Profil-Führungskörper besteht vorzugsweise aus einem einstückigen Kastenprofil, was eine sehr einfache Herstellung ermöglicht.

Er kann jedoch auch aus mindestens zwei Profilen zu einem Kastenprofil zusammengesetzt werden. Bei einer derartigen Ausführungsform ist zwar die Herstellung der Profilteile günstiger, es muß jedoch infolge des notwendigen Zusammenbaus mit einem erhöhten Fertigungsaufwand gerechnet werden, was im Einzelfall gegeneinander abzuwägen ist.

Gemäß einer weiteren Ausgestaltung der Erfindung weisen sowohl die Vorderals auch die Hinterwand des Profil-Führungskörpers an beiden Enden einen Befestigungsflansch auf. Dadurch ist eine Montage des Profil-Führungskörpers, der zugleich die Kassette bildet, sowohl an einer Wand als auch zwischen zwei Wänden im Fahrzeug möglich. Da der Profil-Führungskörper typischerweise mittels Schrauben über die Flansche befestigt wird, kann darüber hinaus durch Einführen der Befestigungsschrauben durch beide gegenüberliegende Flanschteile der Profil-Führungskörper gegen Biegekräfte zusätzlich stabilisiert werden.

Vorzugsweise bestehen dabei die Profile der Profil-Körper aus Strangpreßprofilen, die kostengünstig erhältlich sind, die jedoch durch die erfindungsgemäße Ausbildung die auftretenden Biegekräfte aufnehmen können. Vorzugsweise weisen dabei die Profile versteifende Stege und Ausbuchtungen auf, so daß die Profilgestaltung eine hohe Kraftaufnahme, insbesondere hinsichtlich der Längsbiegung, ermöglicht.

Eine günstige Platzausnutzung für die Selbstverriegelung der Ausfahrbewegung des Profil-Bügelkörpers läßt sich erzielen, wenn die Klinken-/Rastanordnung eine Zahnstange und eine Rastklinke mit Klinkenfeder aufweisen, wobei die Zahnstange an der Schmalseite der Ausbuchtung am Profilbügel-Körper quer zu dessen Breite angebracht und die Rastklinke mit Klinkenfedern an einem gegenüberliegenden Steg des Profil-Führungskörpers, in der Ebene des Profil-Bügelkörpers schwenkbar, angelenkt ist. Durch die Queranordnung der Zahnstange, die vorzugsweise gestanzt wird, kann die Ausbuchtung in der Tiefe sehr gering gehalten werden.

Gemäß einer Weiterbildung der Erfindung sind die Führungselemente an den Schmalseiten der Profil-Körper mit Kunststoff-Gleitelementen versehen.

Eine besonders vorteilhafte, weil einfache und dennoch hochwirksame Anordnung läßt sich erzielen, wenn gemäß einer Weiterbildung der Erfindung das Führungselement am Profil-Bügelkörper als axial durchgehende Nut ausgebildet ist, an der im unteren Bereich ein Kunststoff-Gleitelement befestigt ist, und wenn das Führungselement am Profil-Führungskörper als zur Nut komplementäre Vorsprung ausgebildet ist, der am oberen Ende ein kappenartiges Kunststoff-Gleitelement besitzt.

Eine vorteilhafte Anordnung des Antriebssystems ist gegeben, wenn gemäß einer anderen Weiterbildung der Erfindung an der oberen Stirnseite des Profil-Bügelkörpers eine Traverse angebracht ist, an der der obere Teil der Druckfeder anliegt, die im vorgespannten Zustand einen Federführungsbolzen umgibt, der stehend ortsfest am Boden des Profil-Führungskörpers, an dem der untere Teil der Druckfeder anliegt, angebracht ist. Da der Federführungsbolzen somit ortsfest angebracht ist, geht er mit Vorteil in die im Crashfall zu beschleunigende Masse nicht ein.

Zur Begrenzung der Ausfahrbewegung des Profil-Bügelkörpers ist gemäß einer Ausgestaltung der Erfindung im unteren Endbereich des Profil-Bügelkörpers ein Anschlag und im oberen Endbereich des Profil-Führungskörpers ein Gegenanschlag vorgesehen.

Zur Erhöhung der Biegesteifigkeit im ausgefahrenen Zustand des Profil-Bügelkörpers sind im oberen Bereich des Profil-Führungskörpers an seinen Schmalseiten, zu den Schmalseiten des Profil-Bügelkörpers hin, Verstärkungselemente zur Erhöhung der Längsbiegesteifigkeit im ausgefahrenen Zustand des Profil-Bügelkörpers vorgesehen.

Weitere Ausgestaltungen und Vorteile der Erfindung ergeben sich anhand der Beschreibung eines in den Zeichnungen dargestellten Ausführungsbeispieles.

Es zeigen:
- Fig. 1: in einer perspektivischen Darstellung die Überroll-Schutzvorrichtung nach der Erfindung mit dem Profil-Bügelkörper und dem Profil-Führungskörper im ausgefahrenen Zustand des Profil-Bügelkörpers,
- Fig. 2: eine rückwärtige Draufsicht auf die Überroll-Schutzvorrichtung nach Fig. 1,
- Fig. 3: eine Seitenansicht des Überroll-Schutzsystems nach Fig. 1,
- Fig. 4: einen Querschnitt durch die Überroll-Schutzvorrichtung nach Fig. 1,
- Fig. 5: einen Ausschnitt aus Fig. 1 unter vergrößerter Darstellung der Selbstverriegelung des Profil-Bügelkörpers mittels einer Klinken-/Rastanordnung, und
- Fig. 6: in einer Seiten-Längsschnittdarstellung den inneren Aufbau des Überroll-Schutzsystems nach Fig. 1.

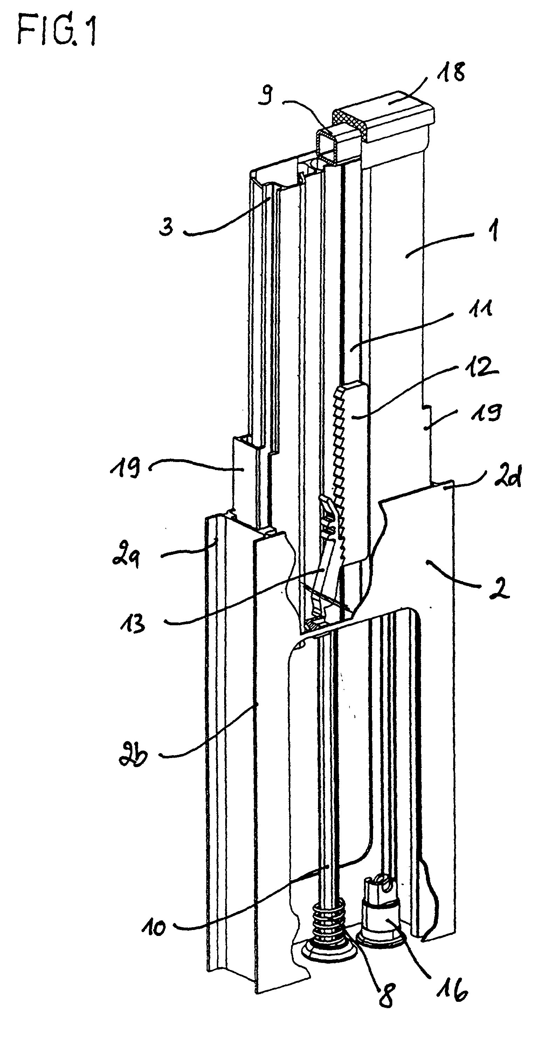

Die Zeichnungen zeigen in verschiedenen Ansichten und Ausschnitten eine besonders vorteilhafte Ausführungsform der erfindungsgemäßen Überroll-Schutzvorrichtung für Kraftfahrzeuge in Form eines jedem Fahrzeugssitz zugeordneten Schutzsystems. Dieses Schutzsystem besteht aus zwei Grundelementen, einem im Crashfall in eine Stützstellung (Fig. 1) ausfahrbaren Überrollkörper in Form eines Profil-Bügelkörpers 1, der aus einem kastenartigen Grundprofil besteht, welches sich über die gesamte Bügelbreite erstreckt, und einem fahrzeugfest angeordneten Profil-Führungskörper 2, der ebenfalls aus einem kastenartigen Grundprofil besteht, und in dem der Profil-Bügelkörper 1 geführt gehaltert ist.

In der Grundstellung des Überrollkörpers ist, ist der Profil-Bügelkörper 1 von dem Profil-Führungskörper 2 weitgehend bis auf den oberen Abschnitt aufgenommen, d.h. der Profil-Führungskörper dient zugleich als Kassette für das Schutzsystem.

Der Profil-Führungskörper 2 besitzt sowohl an der Front- als auch an der Hinterwand jeweils zwei Befestigungsflansche 2 a, b, c und d, mit dem das Schutzsystem sowohl an einer Fahrzeugwand als auch zwischen zwei Wänden im Fahrzeug befestigbar ist. Es ist auch denkbar, den Profil-Führungskörper 2 mit Langschrauben, die durch die Löcher in beiden hintereinanderliegenden Flanschen gesteckt sind, an einer Fahrzeugwand anzuschrauben, wobei durch die angezogenen Schrauben zusätzlich eine Stabilität des Profil-Führungskörpers, der Kassette, gegen Biegekräfte gegeben ist.

Durch die kastenförmige Profilgestaltung in Verbindung mit den aus den Figuren ersichtlichen Stegen und Ausnehmungen in den Profilkörpern kann eine hohe Kraftaufnahme, insbesondere zum Längsbiegen, erzielt werden.

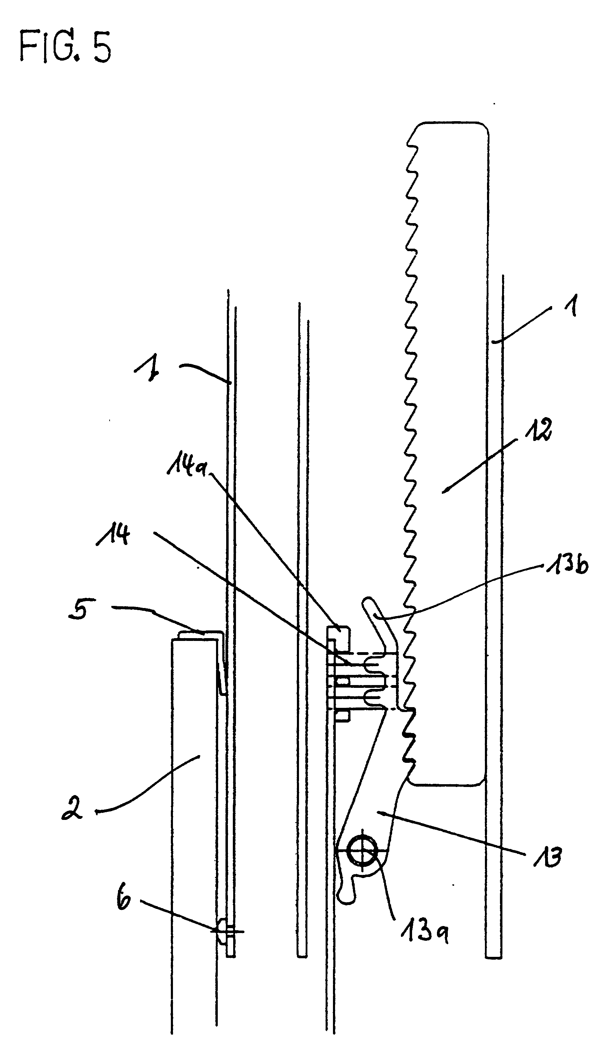

An beiden Schmalseiten der Profilkörper 1, 2 sind zueinander komplementäre Führungselemente ausgebildet, ein nutenförmiger Profileinschnitt 3 am Profil-Bügelkörper 1 und ein dazu komplementärer Vorsprung 4 am Profil-Führungskörper 2, die beide Gleitelemente besitzen. So ist auf dem komplementären Vorsprung 4 an seinem oberen Ende jeweils ein Gleitschuh 5 befestigt (Fig. 5). Ebenso ist in der Nut 3 ein Gleitelement 6 mit vorzugsweise kreisrundem Querschnitt befestigt. Diese Gleitelemente bestehen vorzugsweise aus Kunststoff, insbesondere aus Teflon. Durch diese Führungselemente 3 bis 6 kann auf einfache und dennoch sichere Weise eine wirksame Führung des aus dem Führungskörper 2 ausfahrbaren Bügelkörpers 1 erzielt werden, wenngleich auch Ausführungen mit mehreren an den Vorsprüngen sowie in der Nut übereinander angebrachten Gleitelementen möglich sind.

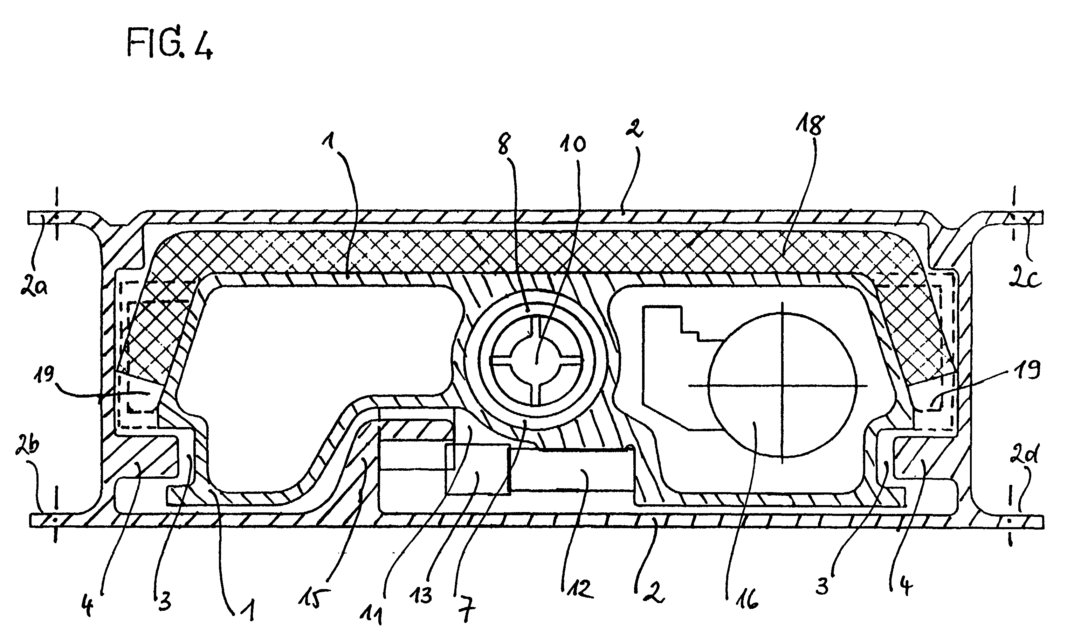

Das erfindungsgemäße Schutzsystem weist nur einen einzigen, mittig angeordneten Federantrieb auf. In einem verstärkten Mittenbereich des Profil-Bügelkörpers 1 (siehe Fig. 4) ist eine Öffnung 7 ausgebildet, in der eine Druckfeder 8 aufgenommen ist, die sich auf ihrer unteren Seite auf einer Bodenplatte des Profil-Führungskörpers 2 abstützt und die mit ihrer oberen Seite an einer Traverse 9, die mit der oberen Stirnseite des Profil-Bügelkörpers 1, diesen abdeckend, verbunden ist, anliegt. An dieser Bodenplatte ist ferner ein Federführungsbolzen 10 stehend fest angebracht, der ein kreuzförmiges Profil besitzt und der im eingefahrenen Zustand des Profil-Bügelkörpers 1, d.h. im vorgespannten Zustand der Druckfeder 8, diese führend durchdringt. Dieser Federantrieb bildet im vorgespannten Zustand der Druckfeder 8 einen Energiespeicher für die Ausfahrbewegung des Überrollkörpers in Form des Profil-Bügelkörpers 1 im Crashfall.

Zur Selbstverriegelung des ausgefahrenen Profil-Bügelkörpers 1, d.h. um zu verhindern, daß bei einem Überschlag der Bügelkörper durch den Aufprall wieder gegen die Druckfeder in Richtung des Führungskörpers 2 zusammengedrückt wird, ist eine Klinken-/Rastanordnung vorgesehen, die parallel zu der Breitenausdehnung des Bügelkörpers in einer Ausbuchtung 11 dieses Bügelkörpers angebracht ist. Diese Klinken-/Rastanordnung weist eine Zahnstange 12 und eine Rastklinke 13 mit vorspannenden Klinkenfedern 14 auf. Die Zahnstange 12 ist an einer Schmalseite der Ausbuchtung 11 am Profil-Bügelkörper 1 fest angebracht, wogegen die Rastklinke 13 mit Klinkenfedern 14 und einem Federzentrierclip 14 a an einem der Schmalseite gegenüberliegenden Steg 15 des Profil-Führungskörpers 2, in der Ebene des Profil-Bügelkörpers mittels eines Bolzens 13 a schwenkbar angelenkt ist. Die Klinke 13 weist dabei einen Fortsatz 13 b auf, mit dem manuell die Verriegelung lösbar ist.

Bei einer Ausfahrbewegung des Profil-Bügelkörpers 1 ratschen daher die Zähne der Zahnstange über die Klinke 13, wogegen im Fall einer Gegenbewegung die Zähne der Klinke 13, im Ausführungsbeispiel drei Zähne, im Wirkeingriff mit den jeweiligen Zähnen der Zahnstange bleiben und eine Bewegung nach unten in Richtung Ruhestellung verhindern.

Durch die Anbringung der vorzugsweise gestanzten Zahnstange 12 quer zur Bügelausdehnung ist es möglich, die Schwenkbewegung der Klinke in eine Ebene parallel zur Bügelerstreckung zu legen, so daß eine günstige Platzausnutzung bei minimaler Tiefe der Ausbuchtung 11 möglich ist.

Zum Halten der Druckfeder 8 im vorgespannten Zustand ist eine mechanische Verriegelungsanordnung vorgesehen, der ein im Überschlagfall entriegelndes Auslösesystem zugeordnet ist. Dieses Auslösesystem besteht aus einem Kraftelement 16, z.B. eine stiftausstoßende, pyrotechnisch betätigte Patrone oder ein Crashmagnet, welches am Boden des Führungskörpers 2 angebracht ist. Die Verriegelungsanordnung besteht typischerweise aus einer Klinke, die in der Ruhestellung mit einem entsprechenden Stift, der im unteren Bereich des Profil-Bügelkörpers 1 angebracht ist, im verriegelten Wirkeingriff steht. Die Klinke ist in Bezug auf das Kraftelement 16 so angeordnet, daß im Überschlagsfall, ausgelöst durch einen entsprechenden Sensor im Fahrzeug, das Kraftelement die Klinke entriegelt, d.h. den Stift am Profil-Bügelkörper 1 freigibt, wodurch der Federantrieb den Bügelkörper nach oben in die Stützstellung schnellen läßt. Derartige Verriegelungsanordnungen mit den zugehörigen Auslösesystemen sind an sich bekannt und brauchen hier nicht näher dargestellt zu werden. Im Prinzip können alle bekannten Typen von solchen Systemen eingesetzt werden, um den Profil-Bügelkörper 1 in der Ruhestellung verriegelt zu halten und im Überschlagsfall die Entriegelung zu bewirken.

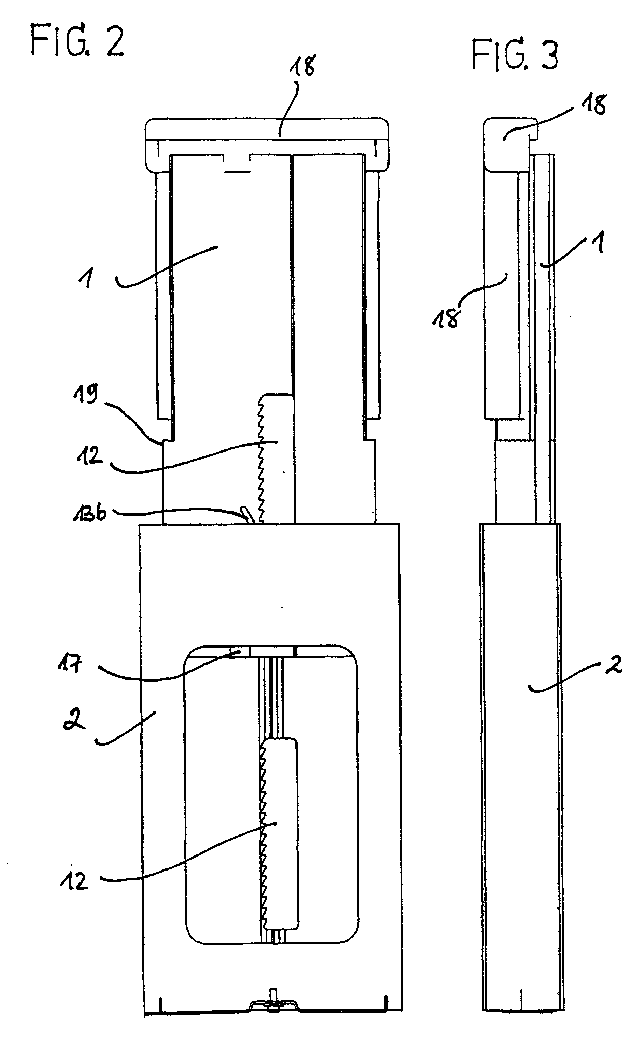

Der obere Teil des Profil-Bügelkörpers 1 ist mit einem Schaumstoff aufgepolstert, um einen eventuellen Kopfaufschlag von PKW-Insassen zu dämpfen. Die entsprechende Schaumschicht 18 umfasst, wie insbesondere aus der Fig. 4 zu erkennen ist, die gesamte Frontfläche des Kastenprofils des Bügelkörpers 1 und setzt sich fast über die gesamte abgeschrägte Schmalseite des Kastenprofils fort. Die axiale Höhe der Schaumstoffumkleidung ist so gewählt, daß im wesentlichen die gesamte, aus dem Profil-Führungskörper im ausgefahrenen Zustand herausragende Frontfläche mit der Schaumstoffschicht 18 bedeckt ist (Fig. 3).

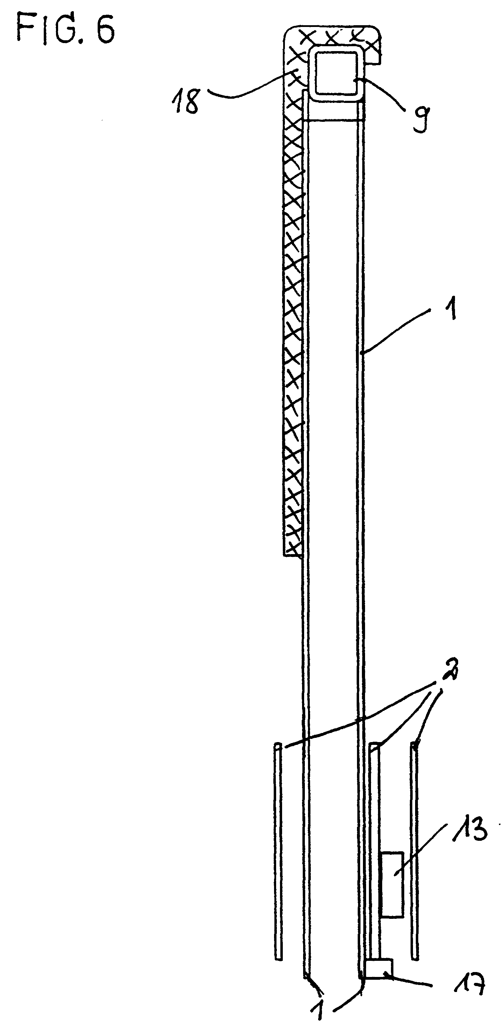

Im unteren Endbereich des Profil-Bügelkörpers 1 ist ein Anschlag 17 und im oberen Endbereich des Profil-Führungskörpers 2 ein Gegenanschlag an der Klinkenbefestigung vorgesehen, durch die die Ausfahrbewegung des Profil-Bügelkörpers 1 begrenzt wird (Fig. 6).

Zur Erhöhung der Biegefestigkeit im ausgefahrenen Zustand des Profil-Bügelkörpers ist jeweils an dessen Schmalseiten eine Verstärkung 19 ausgebildet (Fig. 1 und 4).

### Bezugszeichen

- 1: Bügelkörper
- 2: Führungskörper
- 2 a - d: Befestigungsflansche
- 3: Führungsnut
- 4: Führungsvorsprung
- 5: Gleitelement
- 6: Gleitelement
- 7: Öffnung
- 8: Druckfeder
- 9: Traverse
- 10: Federführungsbolzen
- 11: Ausbuchtung
- 12: Zahnstange
- 13: Klinke
- 13 a: Bolzen
- 13 b: Fortsatz
- 14: Klinkenfeder
- 14 a: Zentrierclip
- 15: Steg
- 16: Kraftelement
- 17: Anschlag
- 17 a: Stift
- 18: Schaumschicht
- 19: Verstärkung

## Patentansprüche

1. Überroll-Schutzvorrichtung für Kraftfahrzeuge, mit einem jedem Fahrzeugsitz zugeordneten Schutzsystem, bestehend aus
- einer fahrzeugfest angeordneten Kassette (2), die als kastenförmiger biegeversteifter Profil-Führungskörper (2) ausgebildet ist, der sich über die gesamte Kassettenhöhe erstreckt,
- einem in der Kassette (2) ausfahrbar in Führungen gehalterten und geführten Überrollkörper in Form eines sich über die gesamte Kassettenbreite erstreckenden Profil-Bügelkörpers (1),
- einer Klinken-/Rastanordnung (12, 13) zur Selbstverriegelung der Ausfahrbewegung, und
- einem Federantriebssystem zum Ausfahren des Profil-Bügelkörpers mit am Profil-Bügelkörper angreifender, vorgespannter Druckfeder (8), und mit einer mechanischen Verriegelungsanordnung zum Halten der Druckfeder im vorgespannten Zustand, der ein im Überschlagfall entriegelndes Auslösesystem (16) zugeordnet ist,
**gekennzeichnet durch** die Merkmale:
- der Profil-Bügelkörper (1) ist kastenprofilartig, biegeversteift ausgebildet,
- an den Schmalseiten des Profil-Bügelkörpers (1) und der Führungskörper-Kassette (2) sind zueinander komplementäre Führungselemente (3,4) ausgebildet,
- das Federantriebssystem weist nur eine einzige, mittig im Profil-Bügelkörper angeordnete Druckfeder (8) auf,
- die Klinken-/Rastanordnung (12,13) liegt in einer zu der Bügelbreite-seite parallelen Ebene in einer Ausbuchtung (11) des Profil-Bügelkörpers,
- der obere Teil des Profil-Bügelkörpers (1) ist mit Schaumstoff (18) umkleidet, und
- das Auslösesystem (16) mit dem zugeordneten Element der Verriegelungsanordnung ist im Bodenbereich der Führungskörper-Kassette (2) und das Gegenelement der Verriegelungsanordnung am unteren Bereich des Profil-Bügelkörpers (1) angebracht.

2. Überroll-Schutzvorrichtung nach Anspruch 1, **dadurch gekennzeichnet, daß** der Profil-Führungskörper (2) aus einem einstückigen Kastenprofil besteht.

3. Überroll-Schutzvorrichtung nach Anspruch 1, **dadurch gekennzeichnet, daß** der Profil-Führungskörper (2) aus mindestens zwei Profilen zu einem Kastenprofil zusammengesetzt ist.

4. Überroll-Schutzvorrichtung nach Anspruch 2 oder 3, **dadurch gekennzeichnet, daß** sowohl die Vorder- als auch die Hinterwand des Profil-Führungskörpers (2) einen Befestigungsflansch (2 a - d) aufweisen.

5. Überroll-Schutzvorrichtung nach einem der Ansprüche 1 bis 4, **dadurch gekennzeichnet, daß** die Profile der Profil-Körper (1, 2) aus Strangpreßprofilen bestehen.

6. Überroll-Schutzvorrichtung nach einem der Ansprüche 1 bis 5, **dadurch gekennzeichnet, daß** die Profile (1, 2) versteifende Stege und Ausbuchtungen aufweisen.

7. Überroll-Schutzvorrichtung nach einem der Ansprüche 1 bis 6, **dadurch gekennzeichnet, daß** die Klinken-/Rastanordnung eine Zahnstange (12) und eine Rastklinke (13) mit Klinkenfeder (14) aufweisen, wobei die Zahnstange an der Schmalseite der Ausbuchtung (11) am Profilbügel-Körper (1) quer zu dessen Breite angebracht und die Rastklinke (13) mit Klinkenfedern (14) an einem gegenüberliegenden Steg (15) des Profil-Führungskörpers (2) in der Ebene des Profil-Bügelkörpers schwenkbar angelenkt ist.

8. Überroll-Schutzvorrichtung nach einem der Ansprüche 1 bis 7, **dadurch gekennzeichnet, daß** die Führungselemente (3, 4) mit Kunststoff-Gleitelementen versehen sind.

9. Überroll-Schutzvorrichtung nach Anspruch 8, **dadurch gekennzeichnet, daß** das Führungselement (3) am Profil-Bügelkörper (1) als axial durchgehende Nut ausgebildet ist, an der im unteren Bereich ein Kunststoff-Gleitelement (6) befestigt ist, und daß das Führungselement (4) am Profil-Führungskörper (2) als zur Nut komplementärer Vorsprung (4) ausgebildet ist, der am oberen Ende ein kappenartiges Kunststoff-Gleitelement (5) besitzt.

10. Überroll-Schutzvorrichtung nach einem der Ansprüche 1 bis 9, **dadurch gekennzeichnet, daß** an der oberen Stirnseite des Profil-Bügelkörpers eine Traverse (9) angebracht ist, an der der obere Teil der Druckfeder (8) anliegt, und die im vorgespannten Zustand einen Federführungsbolzen (10) umgibt, der stehend ortsfest im Boden des Profil-Führungskörpers (2), an dem der untere Teil der Druckfeder (8) anliegt, angebracht ist.

11. Überroll-Schutzvorrichtung nach einem der Ansprüche 1 bis 10, **dadurch gekennzeichnet, daß** im unteren Endbereich des Profil-Bügelkörpers (2) ein Anschlag (17) und im oberen Endbereich des Profil-Führungskörpers ein Gegenanschlag vorgesehen ist.

12. Überroll-Schutzvorrichtung nach einem der Ansprüche 1 bis 11, **dadurch gekennzeichnet, daß** im oberen Bereich des Profil-Führungskörpers (2) an seinen Schmalseiten, zu den Schmalseiten des Profil-Bügelkörpers hin, Verstärkungselemente (19) zur Erhöhung der Längsbiegesteifigkeit im ausgefahrenen Zustand des Profil-Bügelkörpers (1) vorgesehen sind.

## Claims

1. Roll-over protective device for motor vehicles, having a protective system associated with each vehicle seat, comprising:
- a casing (2) which is arranged fixed to the vehicle and which is in the form of a box-shaped flexurally reinforced profile-section guide member (2) which extends over the entire height of the casing,
- a roll-over element, which is held and guided in guides so as to be extended in the casing (2), in the form of a profile-section hoop member (1) which extends over the entire width of the casing,
- a detent/catch arrangement (12, 13) for the self-locking of the extension movement, and
- a spring drive system for extending the profile-section hoop member, having a pretensioned compression spring (8), which acts on the profile-section hoop member, and having a mechanical locking arrangement for holding the compression spring in the pretensioned state, with which locking arrangement an actuation system (16) which unlocks in the event of overturning is associated,
**characterised by** the features:
- the profile-section hoop member (1) is constructed in a box-section-like, flexurally reinforced manner,
- mutually complementary guide elements (3, 4) are constructed at the narrow faces of the profile-section hoop member (1) and the guide member casing (2),
- the spring drive system has only a single compression spring (8) which is arranged centrally in the profile-section hoop member,
- the detent/catch arrangement (12, 13) is located in a projection (11) of the profile-section hoop member in a plane parallel with the hoop width side,
- the upper portion of the profile-section hoop member (1) is covered with cellular material (18), and
- the actuation system (16) having the associated element of the locking arrangement is fitted in the base region of the guide member casing (2) and the counter element of the locking arrangement is fitted to the lower region of the profile-section hoop member (1).

2. Roll-over protective device according to claim 1, **characterised in that** the profile-section guide member (2) comprises an integral box profile-section.

3. Roll-over protective device according to claim 1, **characterised in that** the profile-section guide member (2) is composed of at least two profile-sections to form a box profile-section.

4. Roll-over protective device according to claim 2 or 3, **characterised in that** both the front wall and the rear wall of the profile-section guide member (2) have a mounting attachment (2a - d).

5. Roll-over protective device according to any one of claims 1 to 4, **characterised in that** the profile-sections of the profile-section members (1, 2) comprise extruded profile-sections.

6. Roll-over protective device according to any one of claims 1 to 5, **characterised in that** the profile-sections (1, 2) have reinforcing webs and projections.

7. Roll-over protective device according to any one of claims 1 to 6, **characterised in that** the detent/catch arrangement has a toothed rack (12) and an engaging detent (13) having a catch spring (14), the toothed rack being fitted at the narrow side of the projection (11) to the profile-section hoop member (1) transversely relative to the width thereof and the engaging detent (13) having catch springs (14) being pivotably articulated to an opposing web (15) of the profile-section guide member (2) in the plane of the profile-section hoop member.

8. Roll-over protective device according to any one of claims 1 to 7, **characterised in that** the guide elements (3, 4) are provided with slide elements of plastics material.

9. Roll-over protective device according to claim 8, **characterised in that** the guide element (3) on the profile-section hoop member (1) is in the form of an axially extending channel, to which a plastics slide element (6) is fixed in the lower region, and **in that** the guide element (4) on the profile-section guide member (2) is in the form of a projection (4) which is complementary to the channel and which has a cap-like plastics slide element (5) at the upper end.

10. Roll-over protective device according to any one of claims 1 to 9, **characterised in that** a crosspiece (9) is fitted to the upper end face of the profile-section hoop member, to which crosspiece (9) the upper portion of the compression spring (8) is applied and which, in the pretensioned state, surrounds a spring guide pin (10) which is fitted in an upright stationary manner in the base of the profile-section guide member (2), to which the lower portion of the compression spring (8) is applied.

11. Roll-over protective device according to any one of claims 1 to 10, **characterised in that** a stop (17) is provided in the lower end region of the profile-section hoop member (2) and a counter-stop is provided in the upper end region of the profile-section guide member.

12. Roll-over protective device according to any one of claims 1 to 11, **characterised in that** reinforcement elements (19) for increasing the longitudinal flexural rigidity in the extended state of the profile-section hoop member (1) are provided in the upper region of the profile-section guide member (2) at the narrow sides thereof directed towards the narrow sides of the profile-section hoop member.

## Revendications

1. Dispositif de sécurité en cas de retournement pour véhicules automobiles, comportant un système de protection associé à chaque siège du véhicule, constitué par:
- une cassette (2) montée fixe sur le véhicule et qui est agencée sous la forme d'un corps de guidage profilé (2) en forme de boîte, résistant à la flexion, qui s'étend sur toute la hauteur de la cassette,
- un corps d'arceau retenu et guidé dans des guides de manière à pouvoir être ressorti hors de la cassette (2) et se présentant sous la forme d'un arceau profilé (1) s'étendant sur toute la largeur de la cassette,
- un dispositif à cliquet/d'encliquetage (12, 13) pour l'auto-verrouillage du déplacement de déploiement, et
- un système d'entraînement à ressort pour le déploiement de l'arceau profilé comportant un ressort de pression précontraint (8), qui attaque l'arceau profilé, et un dispositif mécanique de verrouillage pour retenir à l'état précontraint le ressort de pression et auquel est associé un système de déclenchement (16) qui se déverrouille dans le cas d'un retournement;
**caractérisé par** les caractéristiques suivantes:
- l'arceau profilé (1) est agencé avec un profil en forme de boîte, résistant à la flexion,
- des éléments de guidage (3, 4), qui sont complémentaires entre eux, sont formés sur les petits côtés de l'arceau profilé (1) et de la cassette (2) en forme de corps de guidage,
- le système d'entraînement à ressort ne comporte qu'un seul ressort de pression (8) disposé d'une manière centrée dans l'arceau profilé,
- le dispositif à cliquet/d'encliquetage (12, 13) est situé dans un plan parallèle au côté de l'arceau dans le sens de la largeur, dans un évidement (11) de l'arceau profilé,
- la partie supérieure de l'arceau profilé (1) est recouvert d'un matériau mousse (18), et
- le système de déclenchement (16) équipé de l'élément associé du dispositif de verrouillage est monté dans la zone du fond de la cassette (2) formant corps de guidage et l'élément correspondant du dispositif de verrouillage est monté dans la partie inférieure de l'arceau profilé (1).

2. Dispositif de protection en cas de capotage selon la revendication 1, **caractérisé en ce que** le corps de guidage profilé (2) est constitué par un profilé en forme de boîte d'un seul tenant.

3. Dispositif de protection en cas de retournement selon la revendication 1, **caractérisé en ce que** le corps de guidage profilé (2) est constitué d'au moins deux profilés pour former un profilé en forme de boîte.

4. Dispositif de protection en cas de retournement selon la revendication 2 ou 3, **caractérisé en ce qu'**aussi bien la paroi avant que la paroi arrière du corps de guidage profilé (2) possèdent une bride de fixation (2a-d).

5. Dispositif de protection en cas de retournement selon l'une des revendications 1 à 4, **caractérisé en ce que** les profilés des corps profilés (1, 2) sont constitués par des profilés extrudés.

6. Dispositif de protection en cas de retournement selon l'une des revendications 1 à 5, **caractérisé en ce que** les profilés (1, 2) comportent des barrettes de renfort et des évidements.

7. Dispositif de protection en cas de retournement selon l'une des revendications 1 à 6, **caractérisé en ce que** le dispositif à cliquet/d'encliquetage comporte une crémaillère (12) et un cliquet d'encliquetage (13) pourvu d'un ressort d'encliquetage(14), la crémaillère étant disposée sur le petit côté de l'évidement (11) sur l'arceau profilé (1), transversalement par rapport à la largeur de ce dernier, et le cliquet d'encliquetage (13) comportant des ressorts d'encliquetage (14) est articulé de manière à pouvoir pivoter sur une barrette opposée (15) du corps, de guidage profilé (2) dans le plan de l'arceau profilé.

8. Dispositif de protection en cas de retournement selon l'une des revendications 1 à 7, **caractérisé en ce que** les éléments de guidage (3, 4) sont équipés d'éléments coulissants en matière plastique.

9. Dispositif de protection en cas de retournement selon la revendication 8, **caractérisé en ce que** l'élément de guidage (3) disposé sur l'arceau profilé (1) est agencé sous la forme d'une rainure axiale, dans la partie inférieure de laquelle est fixé un élément coulissant en matière plastique (6), et que l'élément de guidage (4) sur le corps de guidage profilé (2) est agencé sous la forme d'une partie saillante (4) complémentaire de la rainure et qui possède, au niveau de son extrémité supérieure, un élément coulissant en matière plastique en forme de capuchon (5).

10. Dispositif de protection en cas de retournement, selon l'une des revendications 1 à 9, **caractérisé en ce que** sur la face frontale supérieure de l'arceau profilé est disposée une traverse (9), sur laquelle s'applique la partie supérieure du ressort de pression (8) et qui, à l'état précontraint, entoure un goujon (10) de guidage des ressorts, qui est monté verticalement en position fixe dans le fond du corps de guidage profilé (2), contre lequel s'applique la partie inférieure du ressort de pression (8).

11. Dispositif de protection en cas de retournement selon l'une des revendications 1 à 10, **caractérisé en ce qu'**une butée (17) est prévue dans la partie d'extrémité inférieure de l'arceau profilé (2) et qu'une butée antagoniste est prévue dans la partie d'extrémité supérieure du corps de guidage profilé.

12. Dispositif de protection en cas de retournement selon l'une des revendications 1 à 11, **caractérisé en ce que** des éléments de renfort (19) servant à accroître la résistance à la flexion longitudinale lorsque l'arceau profilé (1) est dans l'état ressorti, sont prévus dans la partié supérieure du corps de guidage profilé (2), sur ses petits côtés, en direction des petits côtés de l'arceau profilé.
